# EUROPÄISCHE PATENTANMELDUNG

(11) **EP 0 748 710 A1**
(43) Veröffentlichungstag der Anmeldung: **18.12.1996**
(21) Anmeldenummer: 96109469.5
(22) Anmeldetag: 13.06.1996
(51) Int. Cl.: B60J 10/00, B61D 25/00, B60J 9/02

(54) **Entriegelungsvorrichtung für eine Fensterscheibe, insbesondere für Eisenbahnwaggons, mit einem umlaufenden Seil oder Band**

(30) Priorität: 16.06.1995 DE 19521878
(71) Anmelder: Dynamit Nobel GmbH Explosivstoff- und Systemtechnik, 53840 Troisdorf (DE)
(72) Erfinder: Brede, Uwe, 90765 Fürth (DE); Bretfeld, Anton, 90765 Fürth (DE); Fibranz, Joachim, 90765 Fürth (DE); Kordel, Gerhard, 90455 Nürnberg (DE); Kraft, Josef, 92348 Berg (DE); Lehniger, Peter, 91056 Erlangen (DE); Reimer, Jens-Peter, 91074 Herzogenaurach (DE)
(74) Vertreter: Scherzberg, Andreas, Dr.

(57) **Zusammenfassung**

Die Erfindung betrifft eine Entriegelungsvorrichtung für eine Fensterscheibe (1), insbesondere für Eisenbahnwaggons, die über ein Dichtungsprofil (2) an ein Rahmenelement (3) anliegt, wobei die Fensterscheibe (1) über ein Befestigungselement am Rahmenelement (3) befestigt ist und ein Entriegelungselement vorgesehen ist, welches bei Betätigung die Befestigung der Fensterscheibe (1) löst.

Zur sicheren und einfachen Entriegelung wird vorgeschlagen, daß die Fensterscheibe (1) durch ein umlaufendes, gespanntes Seil (16) oder Band (17) gehalten ist und zumindest eine Kappvorrichtung (4,5) zur Durchtrennung des Seils (16) oder des Bandes (17) vorhanden ist.

## Beschreibung

Die Erfindung betrifft eine Entriegelungsvorrichtung für eine Fensterscheibe, insbesondere für Eisenbahnwaggons nach dem Oberbegriff des Anspruchs 1.

Moderne Eisenbahnwaggons werden häufig mit Klimaanlagen ausgestattet. Dies bedingt die Forderung nach einer höheren Wärmedämmung der Fenster. Bei Hochgeschwindigkeitszügen kommt zusätzlich noch die Forderung nach einer guten Schallisolierung und einer großen dynamischen Festigkeit (Ein-/Ausfahrt von Tunnels, Züge auf dem Gegengleis) hinzu. Aufgrund dieser gestiegenen Anforderungen werden Fenster verlangt, die eine so hohe Stabilität besitzen, daß sie manuell (vor allem in der Dunkelheit oder bei Panik-Situationen) nicht mehr zerstört bzw. geöffnet werden können. Um diese Forderungen erfüllen zu können, werden in modernen Hochgeschwindigkeitszügen Isolierglasfenster verbunden mit Verbundglasscheiben verwendet.

Aus der DE-A1-39 25 430 ist eine Entriegelungsvorrichtung für eine Fensterscheibe bekannt, die über ein Dichtungsprofil mit einem Rahmenelement verbunden ist, wobei die Fensterscheibe über ein Befestigungselement am Rahmenelement befestigt ist. In diesem oder am Befestigungselement ist ein mit Gas füllbarer, verformbarer Schlauch angeordnet, der im aufgeblasenen Zustand die Befestigung der Fensterscheibe aufreißt, so daß die Fensterscheibe aus dem Rahmenelement fällt.

Der Erfindung liegt die Aufgabe zugrunde, eine Entriegelungsvorrichtung für eine Fensterscheibe, inbesondere für Eisenbahnwaggons, nach dem Oberbegriff des Anspruchs 1 zu schaffen, die mit einfachen Mitteln nahezu 100 %-ig sicherstellt, daß im Notfall die Fensterscheibe aus dem Rahmen fällt. Außerdem soll dabei die Fensterscheibe wenn möglich nicht zerstört werden.

Erfindungsgemäß wird diese Aufgabe dadurch gelöst, daß die Fensterscheibe durch ein umlaufendes, gespanntes Seil oder Band gehalten ist und zumindest eine Kappvorrichtung zur Durchtrennung des Seils oder des Bandes vorhanden ist.

Mit diesen Seilen und Bändern ist eine einfache und absolut sichere Verriegelung und Entriegelung der Fensterscheibe möglich.

In einer bevorzugten Ausführungsform sind an der Fensterscheibe Krallen und am Rahmenelement Gegenkrallen angeordnet, zwischen denen das Seil in Mäanderform geführt ist. Mäanderform heißt, daß alle Krallen auf einer Seite des Seils und alle Gegenkrallen auf der anderen Seite angeordnet sind. Durch die Spannung des Seils ergibt sich dann die Befestigung. Wird das Seil durch die Kappvorrichtung durchgeschnitten, läßt schlagartig die Spannung nach und die Verbindung der Fensterscheibe mit dem Rahmenelement ist gelöst.

Vorteilhafterweise ist ein Seilspanner zum Spannen des Seils vorhanden. Zweckmäßig ist der Seilspanner an der Verbindungsstelle der beiden Enden des umlaufenden Seils angeordnet.

In einer alternativen bevorzugten Ausführungsform ist ein Spannband auf dem Außenumfang der Fensterscheibe angeordnet, welches am Rahmenelement abgestützt ist. Hierdurch ist die Fensterscheibe ebenfalls fest mit dem Rahmenelement verbunden. Sinnvollerweise ist zwischen dem Spannband und der Fensterscheibe das Dichtungsprofil eingeklemmt. Zur besseren Verbindung ist es zweckmäßig, das Spannband auf der zum Dichtungsprofil gewandten Seite mit einer Riffelung zu versehen.

Erfindungsgemäß ist die Kappvorrichtung eine Seilkappvorrichtung oder ein Bandschneider. Bei der Ausführungsform mit dem Spannband kann die Durchtrennung entweder mit einem Bandschneider oder mit einer Seilkappvorrichtung geschehen. Hierzu müßten jedoch die Enden des Spannbandes mit einem Seil verbunden werden, welches dann durch eine Seilkappvorrichtung getrennt werden kann.

Bevorzugt sind die Kappvorrichtungen pyrotechnisch angetrieben. Es können jedoch auch hydraulische, mechanische, elektrische oder andere Antriebe vorgesehen werden. Selbstverständlich kann die Durchtrennung oder Auslösung auch manuell erfolgen.

Erfindungsgemäß ist das Seil ein Stahlseil und das Band bzw. Spannband ein Stahlband.

Vorteilhafterweise sind zumindest zwei Kappvorrichtungen vorgesehen, die im Betätigungsfall gleichzeitig betätigt werden.

In einer weiteren vorteilhaften Ausführungsform ist das Rahmenelement mit der Fensterscheibe über eine Fangvorrichtung verbunden, die die Fensterscheibe nach dem Entriegeln auffängt.

Weitere Merkmale der Erfindung zeigen die Figuren, die nachfolgend eingehend beschrieben sind. Es zeigt:
- Fig. 1 bis 3: eine Entriegelungsvorrichtung mit einem gespannten, umlaufenden Seil und eine Seilkappvorrichtung,
- Fig. 4: eine Entriegelungsvorrichtung mit einem auf dem Außenumfang der Fensterscheibe umlaufenden Spannband und einem Bandschneider und
- Fig. 5: eine Entriegelungsvorrichtung ebenfalls mit einem Spannband, jedoch mit einer Seilkappvorrichtung.

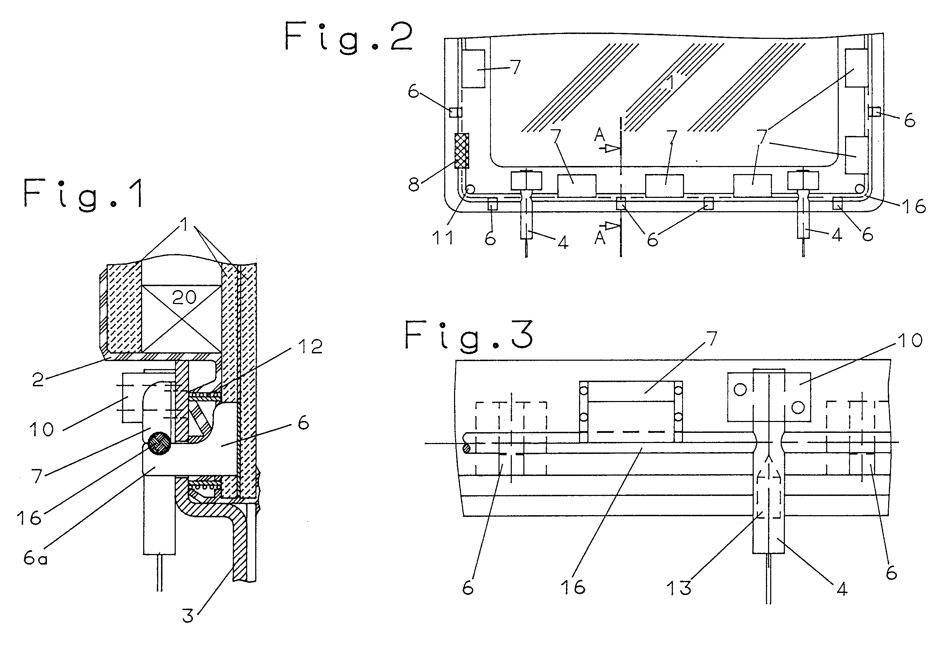

Die Figuren 1 bis 3 zeigen eine erfindungsgemäße Entriegelungsvorrichtung mit einer Fensterscheibe 1, die aus einer Isolierglas-Verbundscheibe mit drei Scheiben besteht. Zwei nach außen gerichtete Verbundglasscheiben sind über einen Abstandshalter 20 mit einer dritten Scheibe verbunden. Über ein Dichtungsprofil 2 ist die Fensterscheibe 1 mit einem Rahmenelement 3 verbunden. Die eigentliche Befestigung erfolgt über Krallen 6, die an der Fensterscheibe 1 befestigt sind und Gegenkrallen 7, die am Rahmenelement 3 festliegen. Zwischen den Krallen 6 und den Gegenkrallen 7 ist in Mäanderform ein Seil 16 umlaufend um die gesamte Fensterscheibe 1 geführt und ist über einen Seilspanner 8 gespannt (siehe Fig. 2). Der Seilspanner 8 verbindet dabei die beiden Enden des umlaufenden Seils 16 und spannt das Seil 16. Durch die Spannung ist die Fensterscheibe 1 fest mit dem Rahmenelement 3 verbunden. Die Krallen 6 sind entweder aufgeklebt oder aber wie gezeigt zwischen zwei Scheiben der Verbundscheibe eingesetzt. Das hakenförmige Ende 6a der Kralle 6 durchragt dabei das Rahmenelement 3 und umschließt halbkreisförmig zusammen mit der Gegenkralle 7 das Seil 16. Über die Halterung 10 ist eine Seilkappvorrichtung 4 am Rahmenelement 3 befestigt, die im Betätigungsfall das Seil 16 durchtrennt, wodurch seine Spannung aufgehoben ist und dadurch die Fensterscheibe 1 gelöst ist.

Fig. 2 zeigt die Anordnung der Krallen 6 und Gegenkrallen 7. Das Seil 16 ist über Stifte oder Umlenkrollen 11 geführt. Fig. 3 zeigt einen vergrößerten Ausschnitt von Fig. 2. In der Seilkappvorrichtung 4 ist gestrichelt der Schneidkolben 13 angedeutet.

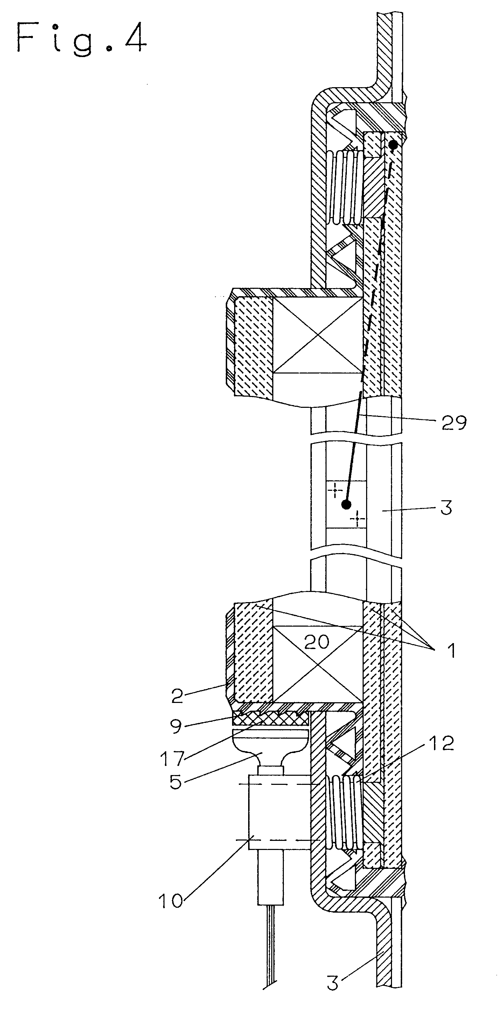

Fig. 4 zeigt eine Ausführungsform, bei der ein Spannband 17 auf dem Außenumfang der Fensterscheibe 1 angeordnet ist, welches am Rahmenelement 3 abgestützt ist. Das Spannband 17 ist auf seiner Innenseite mit einer Riffelung 9 versehen, die in das Dichtungselement 2 eingreift, welches zwischen dem Spannband 17 und der Fensterscheibe 1 angeordnet ist. Auf dem Rahmenelement 3 ist ein Bandschneider 5 über eine Halterung 10 befestigt. Im Betätigungsfall durchtrennt eine Klinge des Bandschneiders 5 das Spannband 17.

Mit dem Bezugszeichen 29 ist eine Fangvorrichtung angedeutet, die aus z.B. einem Seil besteht und die Fensterscheibe 1 mit dem Rahmenelement 3 verbindet. Nach dem Entriegeln der Fensterscheibe 1 wird diese dadurch aufgefangen, so daß keine Personen veletzt werden können.

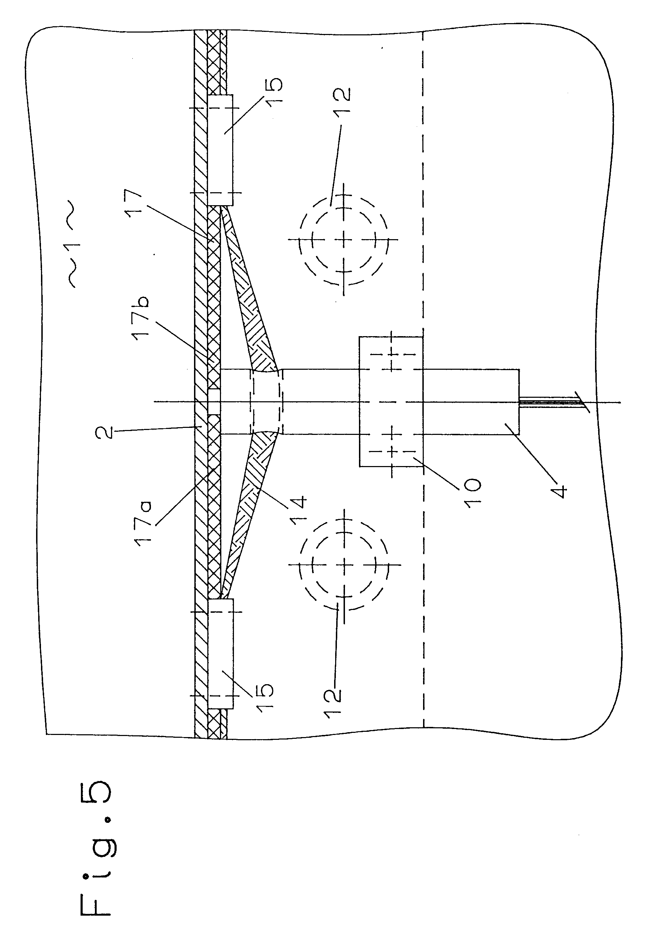

In der Fig. 5 ist eine alternative Durchtrennung des Spannbandes 17 gezeigt. Die beiden Enden 17a, 17b des Spannbandes 17 sind hier über ein Seil 14, welches mit Halteklammern 15 am Seil 14 befestigt ist, verbunden. Das Seil 14 ist durch eine Seilkappvorrichtung 4 geführt, so daß durch Durchtrennen des Seils 14 das Spannband 17 entspannt ist und dadurch die Verbindung der Fensterscheibe 1 mit dem Rahmenelement 3 gelöst ist.

Zum besseren Auswerfen der Fensterscheibe 1 ist diese in Auswurfrichtung über eine Feder 12 federbelastet (siehe Fig. 1,4 und 5). Die Feder 12 ist dabei zwischen der Fensterscheibe 1 und dem Rahmenelement 3 angeordnet.

## Patentansprüche

1. Entriegelungsvorrichtung für eine Fensterscheibe (1), insbesondere für Eisenbahnwaggons, die über ein Dichtungsprofil (2) an ein Rahmenelement (3) anliegt, wobei die Fensterscheibe (1) über ein Befestigungselement am Rahmenelement (3) befestigt ist und ein Entriegelungselement vorgesehen ist, welches bei Betätigung die Befestigung der Fensterscheibe (1) löst, **dadurch gekennzeichnet**, daß die Fensterscheibe (1) durch ein umlaufendes, gespanntes Seil (16) oder Band (17) gehalten ist und zumindest eine Kappvorrichtung (4,5) zur Durchtrennung des Seils (16) oder des Bandes (17) vorhanden ist.

2. Entriegelungselement nach Anspruch 1, **dadurch gekennzeichnet**, daß an der Fensterscheibe (1) Krallen (6) und am Rahmenelement (3) Gegenkrallen (7) angeordnet sind, zwischen denen das Seil (16) in Mäanderform geführt ist.

3. Entriegelungsvorrichtung nach Anspruch 2, **dadurch gekennzeichnet**, daß ein Seilspanner (8) zum Spannen des Seils (16) vorhanden ist.

4. Entriegelungsvorrichtung nach Anspruch 1, **dadurch gekennzeichnet**, daß ein Spannband (17) auf dem Außenumfang der Fensterscheibe (1) angeordnet ist, welches am Rahmenelement (3) abgestützt ist.

5. Entriegelungsvorrichtung nach Anspruch 4, **dadurch gekennzeichnet**, daß zwischen dem Spannband (17) und der Fensterscheibe (1) das Dichtungsprofil (2) eingeklemmt ist.

6. Entriegelungsvorrichtung nach Anspruch 5, **dadurch gekennzeichnet**, daß das Spannband (17) auf der zum Dichtungsprofil (2) gewandten Seite mit einer Riffelung (9) versehen ist.

7. Entriegelungsvorrichtung nach einem der Ansprüche 1 bis 6, **dadurch gekennzeichnet**, daß die Kappvorrichtung (4,5) eine Seilkappvorrichtung (4) oder ein Bandschneider (5) ist.

8. Entriegelungsvorrichtung nach einem der Ansprüche 1 bis 7, **dadurch gekennzeichnet**, daß die Kappvorrichtungen (4,5) pyrotechnisch angetrieben sind.

9. Entriegelungsvorrichtung nach einem der Ansprüche 1 bis 8, **dadurch gekennzeichnet**, daß das Seil (16) ein Stahlseil und das Band (17) ein Stahlband ist.

10. Entriegelungsvorrichtung nach einem der Ansprüche 1 bis 9, **dadurch gekennzeichnet**, daß zumindest zwei Kappvorrichtungen (4,5) vorgesehen sind, die im Betätigungsfall gleichzeitig betätigt werden.

11. Entriegelungsvorrichtung nach einem der Ansprüche 1 bis 10, **dadurch gekennzeichnet**, daß das Rahmenelement (3) mit der Fensterscheibe (1) über eine Fangvorrichtung (29) verbunden ist, die die Fensterscheibe (1) nach dem Entriegeln auffängt.
